(19) Europäisches Patentamt
European Patent Office
Office européen des brevets

(11) Veröffentlichungsnummer: **0 195 199**
**B1**

# (12) EUROPÄISCHE PATENTSCHRIFT

(45) Veröffentlichungstag der Patentschrift: **31.05.89**

(51) Int. Cl.⁴: **C 08 G 65/44**

(21) Anmeldenummer: **86101005.6**

(22) Anmeldetag: **25.01.86**

(54) **Kohlenwasserstoffharz-Polyphenylenether-Kammpolymere und deren Mischungen mit Polyphenylenethern sowie Verfahren zu ihrer Herstellung.**

(30) Priorität: **14.03.85 DE 3509093**

(43) Veröffentlichungstag der Anmeldung: **24.09.86 Patentblatt 86/39**

(45) Bekanntmachung des Hinweises auf die Patenterteilung: **31.05.89 Patentblatt 89/22**

(84) Benannte Vertragsstaaten: **AT BE CH DE FR GB IT LI NL SE**

(56) Entgegenhaltungen:
**PATENTS ABSTRACTS OF JAPAN, Band 1, Nr. 53, 23. Mai 1977, Seite 218 C 77; & JP - A - 52 9098 (MITSUBISHI GAS KAGAKU K.K.) 24.01.1977**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, Patentabteilung / PB 15 - Postfach 13 20, D-4370 Marl 1 (DE)**

(72) Erfinder: **Bartmann, Martin, Dr., Burgstrasse 35, D-4350 Recklinghausen (DE)**

EP 0 195 199 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft neuartige Kohlenwasserstoffharz-Polyphenylenether-Kammpolymere und deren Mischungen mit Polyphenylenethern sowie Verfahren zu ihrer Herstellung.

Polyphenylenether, insbesondere Poly-(2,6-dimethylphenylenether) (PPE), und Verfahren zu ihrer Herstellung sind bekannt. Sie werden z. B. in Bühler "Spezialplaste" (Akademieverlag, Berlin, 1978) und bereits in den US-PSS-3 306 874 und 3 306 875 beschrieben.

Im industriellen Bereich haben sich die Verfahren durchgesetzt, bei denen ortho-substituierte Phenole in Gegenwart von Sauerstoff bzw. Sauerstoff enthaltenden Gasmischungen durch Kupferamin-Komplexe oxidativ gekuppelt werden.

Polyphenylenether sind technische Hochleistungsthermoplaste mit hohen Schmelzviskositäten und Erweichungspunkten. Sie eignen sich für zahlreiche technische Anwendungen, bei denen es auf Beständigkeit bei hoher Temperatur ankommt. Gewisse Eigenschaften der Polyphenylenether sind für einige technische Anwendungen unerwünscht. Beispielsweise sind Formteile aus Polyphenylenethern aufgrund ihrer schlechten Schlagzähigkeit überaus spröde. Die Verarbeitung als Schmelze ist technisch bisher ohne Bedeutung geblieben, da es bei den erforderlichen hohen Temperaturen zu Abbaureaktionen kommt, die sich durch Verfärbung des Produkts bemerkbar machen.

Es ist bekannt, daß die Eigenschaften von Polyphenylenethern durch Abmischungen mit anderen Polymeren verbessert werden können. So ist aus der US-PS-3 383 435 und der DE-AS-2 119 301 bekannt, daß die Verarbeitbarkeit von Polyphenylenethern in der Schmelze durch Abmischungen mit Polystyrolharzen, vorzugsweise kautschukmodifizierten schlagzähen Polystyrolen, verbessert werden kann.

Die Materialeigenschaften derartiger Formmassen sind im allgemeinen noch nicht zufriedenstellend: die Formteile weisen vielfach eine nicht ausreichende Schlagzähigkeit und Wärmeformbeständigkeit auf.

Es ist deshalb vorgeschlagen worden, die Schlagzähigkeit durch Zugabe von elastomeren Blockmischpolymerisaten zu erhöhen. So werden z. B. in der DE-AS-1 932 234 sowie in den DE-OSS-2 434 848, 2 713 509, 2 750 515 Formmassen aus Styrolpolymerisaten, Polyphenylenethern und Zusätzen von unterschiedlich aufgebauten hydrierten und/oder nichthydrierten Blockmischpolymeren beschrieben. Letztere bestehen vornehmlich aus polymerisierten vinylaromatischen Kohlenwasserstoffblöcken und polymerisierten konjugierten Dienpolymerisatblöcken. Ferner sind in den US-PSS-3 658 945, 3 943 191, 3 959 211, 3 974 235, 4 101 503, 4 101 504, 4 101 505 und 4 102 850 Verfahren beschrieben, bei denen die Polystyrolkomponente durch Pfropfung mit einem Ethylen-α-Olefin-Dien-Terpolymeren modifiziert wird. Für diese Verfahren gilt jedoch, daß die Herstellung der Blockmischpolymeren und der Pfropfprodukte aufwendig und ihr Zusatz mit einer Senkung der Wärmeformbeständigkeit verbunden ist.

Die DE-OS-2 107 935 beschreibt ein Verfahren zur Herstellung einer Mischung aus einem Polyphenylenether und einem Kautschuk. Dieses Verfahren sieht vor, daß man ein 2,6-disubstituiertes Phenol in Gegenwart eines Kautschuks, wie z. B. Polyisopren, polymerisiert. Man erhält auf diese Weise ein Produkt, bei dem die Identität der Mischungskomponenten, Polyphenylenether und Kautschuk, erhalten bleibt. Dies wird am deutlichsten dadurch demonstriert, daß man die Komponenten der Mischung durch geeignete Maßnahmen wieder trennen kann. Beispielsweise kann man die Mischung in einem geeigneten Lösemittel vollständig auflösen und durch Zugabe eines weiteren Lösemittels, das eine der beiden Komponenten nicht löst, eine Trennung der Komponenten erreichen. Dies gilt auch für feinteilige Pulvergemische aus Polyphenylenethern und Kautschuk, die gemäß der DE-PS-2 111 043 erhalten werden.

Polyphenylenether und Kohlenwasserstoffharze sind nur wenig miteinander verträglich. Daher ist der Zusatz von Polyethylenen zu Polyphenylenethern und deren Mischungen mit Polystyrolharzen auf sehr geringe Mengen beschränkt, wenn es nicht zu Versprödung und Delaminierung kommen soll (vgl. EP-OS-0 080 666, Seite 2, Zeilen 4 bis 10). Eine Verbesserung wird bisher nur durch den Zusatz von Verträglichkeitsvermittlern, wie Styrol-Butadien-Blockcopolymeren erreicht.

Ein neueres Verfahren sieht vor, 2,6-disubstituierte Phenole in Gegenwart bestimmter Mangan-Amin-Katalysatoren oxidativ zu kuppeln und die Aminokomponente in das erhaltene Polymere mit einzubauen. Die erhaltenen funktionalisierten Polyphenylenether lassen sich bei erhöhter Temperatur mit ungesättigten Verbindungen pfropfen (vgl. EP-OS-0 101 873). Bei diesem Verfaren besteht allerdings die Gefahr, daß es zu Gelbildung kommt. Dies belegen die Beispiele. Das beschriebene Pfropfungsverfahren dürfte sich schon deshalb nicht durchsetzen, da es nur auf speziell hergestellte funktionalisierte Polyphenylenether anwendbar ist.

Aus der DE-OS-1 745 201 ist bekannt, daß die Kettenlänge von Polyphenylenethern dadurch geregelt werden kann, daß man dem Reaktionsansatz ein Phenol beifügt, das in den Positionen 2, 4 und 6 durch niedere Alkylgruppen substituiert ist.

Schließlich beschreibt die JP-5 29 098 Kammpolymere, welche eine Kohlenwasserstoffkette (aufgebaut aus konjugierten Dienen) und Polyphenylenether enthalten.

Ein Ziel der vorliegenden Erfindung war es, eine neue, mit Polyphenylenethern verträgliche Kohlenwasserstoffharzkomponente bereitzustellen.

Ein weiteres Ziel bestand darin, neuartige Polyphenylenether zu synthetisieren.

Es wurde jetzt gefunden, daß man die aus alkylierten Phenolen und Ethylen-Propylen-Ethylidennorbornen-Terpolymeren oder Polyoctenylenen erhältlichen funktionalisierten Kohlenwasserstoffharze mit freien Phenolgruppen als Comonomere bei der oxidativen Kupplung von ortho-substituierten Phenolen einsetzen

kann. Das erhaltene Reaktionsprodukt stellt ein Gemisch aus einem Polyphenylenether und einem Kammpolymer mit einem Kohlenwasserstoffharz als Hauptkette und Polyphenylenethergruppen als Seitenkette dar. Dieses Kammpolymer ist auf einfache Weise auch separat herstellbar.

Gegenstand der vorliegenden Erfindung ist das Verfahren zur Herstellung dieser Polyphenylenethergemische bzw. des separierten Kammpolymeren nach den Ansprüchen 1 bis 6 sowie die nach diesen Verfahren erhältlichen Produkte gemäß den Ansprüchen 7 und 8.

Als substituierte Phenole (I) kommen Verbindungen der allgemeinen Formel

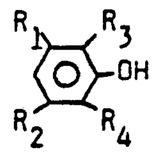

infrage. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z. B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet. Selbstverständlich können auch Gemische der hier aufgeführten monomeren Phenole eingesetzt werden.

Die trisubstituierte Phenolkomponente (II) kann durch die allgemeine Formel

$A(B)_n$

charakterisiert werden, wobei sich A von dem Grundgerüst eines Ethylen-Propylen-Ethylidennorbornen-Terpolymers oder Polyoctenylens ableitet, B für eine phenolische Seitengruppe der Formel

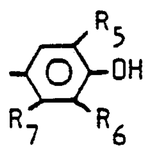 und/oder 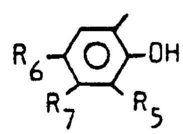

steht, in denen die Reste $R_5$, $R_6$ und $R_7$ jeweils ein Halogen, einen Phenylrest oder einen n-Alkylrest mit bis zu 6 C-Atomen, vorzugsweise den Methylrest, bedeuten und der Rest $R_7$ auch Wasserstoff sein kann und n die Zahl der an ein Molekül des Kohlenwasserstoffharzes gebundenen phenolischen Seitengruppen angibt. n hat im Durchschnitt einen Wert zwischen 2 und 70, vorzugsweise zwischen 5 und 30.

Die modifizierten Ethylen-Propylen-Ethylidennorbornen-Terpolymere bzw. Polyoctenylene (II) der allgemeinen Formel $A(B)_n$

erhält man durch Umsetzung von Ethylen-Propylen-Ethylidennorbornen-Terpolymeren oder Polyoctenylenen (III) mit Phenolen (IV) der Formel

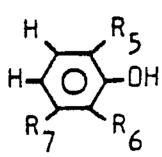 und/oder 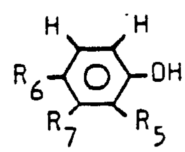 ,

wobei $R_5$, $R_6$ und $R_7$ die vorstehend aufgeführte Bedeutung haben (vgl. Angew. Macromol. Chem. 24, 205 (1972), und 74, 17 (1978). Vorzugsweise haben $R_5$ und $R_6$ die Bedeutung einer Methylgruppe und $R_7$ steht für Wasserstoff.

Die Anlagerung des Phenols an das Ethylen-Propylen-Ethylidennorbornen-Terpolymer oder Polyoctenylen wird üblicherweise in Gegenwart einer Säure durchgeführt. Geeignete Säuren sind z. B. Schwefelsäure, Perchlorsäure, p-Toluolsulfonsäure und Benzolsulfonsäure. Bevorzugt wird Methansulfonsäure.

Geeignete Ethylen-Propylen-Ethylidennorbornen-Terpolymere und Polyoctenylene (III) haben ein Molekulargewicht von 1 000 bis 1 000 000, vorzugsweise von 50 000 bis 500 000.

Die Zahl n der pro Molekül addierten phenolischen Gruppen hängt unter anderem vom Molekulargewicht und dem Doppelbindungsgehalt der eingesetzten Ethylen-Propylen-Ethylidennorbornen-Terpolymere und Polyoctenylene ab.

Der oxidativen Kupplungsreaktion wird ein Gemisch aus dem soeben beschriebebenen modifizierten Ethylen-Propylen-Ethylidennorbornen-Terpolymer oder Polyoctenylen (II) und substituierten. Phenolen (I) unterworfen. Der Masseanteil des modifizierten Ethylen-Propylen-Ethylidennorbornen-Terpolymers oder Polyoctenylens (II) in diesem Gemisch liegt zwischen 1 und 50, vorzugsweise zwischen 3 und 20 %.

Ein solches Gemisch kann durch Vereinigen der beiden Komponenten (I + II) hergestellt werden. Es ist aber auch möglich, das ungesättigte Kohlenwasserstoffharz II von vornherein mit einem Phenolüberschuß umzusetzen und das erhaltene Reaktionsgemisch direkt der oxidativen Kupplungsreaktion zu unterwerfen. Vorzugsweise erfolgt diese Reaktion nach den Verfahren der DE-OSS-3 224 692 und 3 313 864 aowie der deutschen Patentanmeldung P-3 332 377.1.

Die Aufarbeitung der im Anschluß an die oxidative Kupplung erhaltenen Lösungen aus Polyphenylenether und Kohlenwasserstoffharz/Polyphenylenether-Kammpolymer kann nach den üblichen Verfahren, z. B. durch gemeinsame Fällung mittels Zugabe eines Antilösungsmittels, durch Direktisolationsverfahren(Sprühtrocknung oder Heißwasserzerkrümelung) oder direkt durch Eindampfung und anschließende Entgasung gemäß deutscher Patentanmeldung P-3 337 629.8 (Verfahren zum Herstellen thermoplastischer Formmassen, enthaltend Polyphenylenether) erfolgen.

Aus dem so erhaltenen Gemisch, das nur den Polyphenylenether und das Kohlenwasserstoffharz-Polyphenylenether-Kammpolymere enthält, läßt sich letzterer auf folgende Weise abtrennen:

Man löst das Gemisch in einem Lösemittel auf, das beide Komponenten zu lösen imstande ist. Infrage kommen Lösemittel, wie Toluol, Benzol, Ethylbenzol, Xylol, Chloroform, Chlorbenzol und Dichlorbenzol. Vorzugsweise verwendet man Toluol. Anschließend fügt man zu dieser Lösung ein sogenanntes Antilösemittel, d. h. ein Lösemittel, in dem der Polyphenylenether unlöslich, das Kammpolymere aber löslich ist. Geeignete Antilösemittel sind z. B. Hexan, Heptan und Cyclohexan. Nach Abtrennung des Polyphenylenethers dampft man die erhaltene Lösung ein und erhält so das Kammpolymere.

Eine weitere Möglichkeit besteht darin, daß man unmittelbar von der nach der oxidativen Kupplungsreaktion anfallenden organischen Lösung des Reaktionsprodukts ausgeht. Dies setzt aber voraus, daß für die oxidative Kupplungsreaktion ein Lösemittel gewählt wurde, in dem das Reaktionsprodukt hinreichend löslich ist. Die Lösemittel sind der einschlägigen Literatur zu entnehmen. Besonders geeignet ist Toluol. Anschließend wird das Antilösemittel zugesetzt und das Kammpolymere isoliert, wie oben beschrieben.

Das Kammpolymere selbst sowie seine Mischungen mit Polyphenylenethern sind von großem Interesse für die Herstellung von Formmassen mit neuartigen Eigenschaften.

Die Bestimmung der Viskosität mit Hilfe des J-Wertes erfolgt analog zu DIN 53 728 durch Auflösen von 0,5 g Substanz in 100 $cm^3$ Chloroform.

Dimethylphenol wird im folgenden vielfach mit DMP abgekürzt.

**Beispiel 1**

Herstellung einer Lösung aus 2,6-DMP-modifiziertem EPDM-Harz und 2,6-DMP

2 kg EPDM-Harz (Copolymer aus 48 Masseprozent Ethylen, 42 Masseprozent Propylen und 10 Masseprozent 5-Ethyliden-bicyclo-(2.2.1)-hept-2-en, Mooney-Viskosität ML (1 + 4) bei 100°C = 45, $\bar{M}_w$ = ca. 160 000) werden in einer Inertgasatmosphäre bei 150°C unter Rühren in 17,8 kg 2,6-Dimethylphenol gelöst und mit einer Lösung von 50 g Methansulfonsäure in 200 g Xylol und 200 g 2,6-Dimethylphenol versetzt. Man läßt 4 Stunden reagieren und verdünnt nach Abkühlen auf 100°C mit 50 kg Toluol. Die auf Raumtemperatur abgekühlte Lösung wird mit Wasser bis zur neutralen Reaktion gewaschen und danach über Natriumsulfat getrocknet. Die auf diese Weise erhaltene Lösung kann direkt der oxidativen Kupplungsreaktion zur Herstellung einer Mischung aus Poly-(2,6-dimethyl-1,4-phenylen-ether) und eines EPDM-Harz-PPE-Kammpolymeren unterworfen werden.

Eine Probe der so erhaltenen Lösung wird aufgearbeitet und der Gewichtsanteil der phenolischen Seitengruppen im Kammpolymeren bestimmt. Laut IR- und UV-Messungen beträgt dieser Anteil 1,5 %.

**Beispiel 2**

Polykondensation der nach Beispiel 1 erhaltenen Lösung aus 2,6-DMP-modifiziertem EPDM-Harz und 2,6-DMP

In einem Rührkessel legt man eine Mischung aus 140 kg Toluol, 26 kg Methanol, 3,6 kg Morpholin und eine Lösung von 0,2 kg $CuCO_3$ in 0,7 kg Bromwasserstoffsäure (48 %-ig) vor. Unter Rühren (250 U/min) und Einleiten eines Luftstroms von ca. 8 $m^3/h$ gibt man die in Beispiel 1 hergestellte Lösung von 2,6-Dimethylphenol und modifiziertem EPDM-Harz in Toluol über einen Zeitraum von 30 Minuten zu. 60 Minuten nach Beendigung der Zugabe wird die Polykondenaation durch Zugabe von wäßriger Essigsäure gestoppt. Man fällt das Polymere durch Zugabe von Methanol aus und trocknet es.

Ausbeute = 19 kg
J = 75 ml/g
NMR-Spektrum: 22 % H aromatisch = 6,5 (s)
68 % H Ar-$\underline{CH_3}$ = 2,1 (s)
7 % H Alk.-$\underline{CH_2}$-Alk. = 1,3 (m)
3 % H Alk.-$\underline{CH_3}$ = 0,9 (m)

Laut GPC-Analyse lag eine Mischung aus 75 Gewichtsprozent PPE und 25 Gewichtsprozent eines PPE-Harz-EPDM-Kammpolymeren vor.

$\bar{M}_w$ (PPE) = ca. 35 000
$\bar{M}_w$ (PPE/EPDM) = ca. 400 000.

**Beispiel 3**

Herstellung eines 2,4-DMP-modifizierten EPDM-Harzes

2 kg des in Beispiel 1 beschriebenen unmodifizierten EPDM-Harzes werden in 18 kg 1,2-Dichlorbenzol unter Stickstoff bei 150°C gelöst. Anschließend tropft man zu dieser Lösung innerhalb von 15 Minuten eine Mischung aus 50 g Methansulfonsäure, 2 kg 1,2-Dichlorbenzol und 2 kg 2,4-Dimethylphenol. Man hält die Reaktionsmischung 4 Stunden bei 170 bis 175°C, verdünnt den Ansatz nach Abkühlen durch Zusatz der gleichen Volumenmenge Toluol und isoliert das modifizierte EPDM-Harz durch Eingieoen in 50 kg Methanol. Das abdekantierte Produkt wird zweimal umgefällt, indem man es in Chloroform löst und mit Methanol fällt, und anschließend im Vakuum bei 80°C getrocknet.

Die Ausbeute beträgt 1,8 kg; dies entspricht 95 %. Der Phenolgehalt im Produkt beträgt 2,5 Gewichtsprozent.

**Beispiel 4**

Polykondensation eines 2,4-DMP-modifizierten EPDM-Harzes mit 2,6-DMP

1,8 kg des nach Beispiel 3 erhaltenen modifizierten EPDM-Harzes werden in einer Mischung aus 16 kg 2,6-Dimethylphenol und 20 kg Toluol gelöst und gemäß Beispiel 5 polykondensiert.

Ausbeute = 16,7 kg
J-Wert = 100 ml/g
NMR-Spektrum: 22 % H aromatisch $\delta = 6{,}5$ (s)
68 % H Ar-$CH_3$ $\delta = 2{,}1$ (s)
7 % H Alk-$CH_2$-Alk $\delta = 1{,}3$ (m)
3 % H Alk-$CH_3$ $\delta = 0{,}9$ (m)

**Beispiel 5**

Polykondensation einer Lösung aus 2,6-DMP-modifiziertem EPDM-Harz und 2,6-DMP

Entsprechend Beispiel 1 werden 2,7 kg unmodifiziertes EPDM-Harz mit 15,3 kg 2,6 DMP umgesetzt. Die erhaltene Reaktionslösung wird auf einen Volumengehalt von 20 Litern Toluol eingeengt. Die so erhaltene Lösung wird innerhalb von 30 Minuten zu einer Mischung gegeben, die aus 170 kg Toluol, 26 kg Methanol, 3,6 kg Morpholin und einer Lösung von 0,2 kg Kupfercarbonat in 0,7 kg 48 %-iger Bromwasserstoffsäure besteht und in einem Rührkessel mit einer Geschwindigkeit von 250 Umdrehungen pro Minute gerührt wird, während gleichzeitig 8 $m^3$ Luft pro Stunde eingeleitet werden. 60 Minuten nach Beendigung der Zugabe wird die Polykondensation durch Unterbrechung der Luftzufuhr und gleichzeitiges Einführen einer Mischung aus 45 kg Wasser und 5 kg Methanol und 15minütigem Einleiten von Kohlendioxid (5 $m^3$/h) gestoppt. Danach trennt man die Phasen, wäscht die organische Phase mit 100 kg Wasser bei 80°C und isoliert nach anschließender Phasentrennung das Produkt durch Zugabe von 200 kg Methanol und anschließende Filtration und Trocknung.

Ausbeute = 17 kg
J = 104 ml/g
NMR-Spektrum: 20,5 % H aromatisch
64,2 % H Ar-$\underline{CH_3}$
10,5 % H Alk-$\underline{CH_2}$-Alk
4,5 % H Alk-$\underline{CH_3}$

**Beispiel 6**

Herstellung eines 2,6-DMP-modifizierten Polyoctenylens

Analog zu Beispiel 3 wird aus 2 kg Polyoctenylen, 20 kg o-Xylol, 1,6 kg 2,6-Dimethylphenol sowie einer Mischung aus 80 g Methansulfonsäure in 800 g o-Xylol und 400 g 2,6-Dimethylphenol ein modifiziertes Polyoctenylen hergestellt. Das eingesetzte Polyoctenylen weist einen J-Wert von 120 ml/g und einen trans-Gehalt von 80 % auf. Ein solches Produkt ist unter dem Namen VESTENAMER® 8012 im Handel erhältlich (Hersteller: Chemische Werke Hüls AG, D-4370 Marl 1). Weitere Kenndaten dieses Produkts sind der Zeitschrift "Kautschuk, Gummi, Kunststoffe" 1981, Seiten 185 bis 190, sowie dem hüls-Merkblatt Nr. 2247 "VESTENAMER® 8012" zu entnehmen. Alternativ kann das Produkt auch hergestellt werden. Es sei verwiesen auf K. J. Ivin "Olefin Metathesis", Academic Press, Seite 236 ff., 1983.

Die Reaktionstemperatur liegt zwischen 145 und 150° C. Das Umfällen des Produkts erfolgt durch Auflösen in Toluol und anschließendes Fällen mit Methanol.

Die Ausbeute beträgt 1,8 kg. Der Phenolgehalt beträgt 0,9 Gewichtsprozent.

**Beispiel 7**

Polykondensation des nach Beispiel 6 erhaltenen 2,6-DMP-modifizierten Polyoctenylens mit 2,6-DMP

Das nach Beispiel 6 erhaltene modifizierte Polyoctenylen wird analog zu Beispiel 4 polykondensiert.

Ausbeute = 17 kg
J-Wert = 59 ml/g

**Beispiel 8**

Abtrennung der Kammpolymeren aus ihren Gemischen mit reinen Polyphenylenethern

10 Gewichtsteile der nach Beispiel 2 erhaltenen Mischung aus PPE und EPDM-Harz-PPE-Kammpolymeren werden mit 90 Gewichtsteilen Toluol vereinigt und leicht erwärmt. Man setzt bei Raumtemperatur eine Mischung aus Hexan und Methylcyclohexan im Verhältnis 1 : 1 zu. Während das reine PPE bei Raumtemperatur ausfällt, bleibt das Kammpolymere in Lösung.

In analoger Weise kann das Kammpolymere aus den nach den Beispielen 4, 5 und 7 erhaltenen Mischungen abgetrennt werden.

**Vergleichsbeispiel A**

Eine Mischung aus 9 Gewichtsteilen PPE und 1 Gewichtsteil des in Beispiel 1 beschriebenen unmodifizierten EPDM-Harzes wird mit 90 Gewichtsteilen Toluol vereinigt und leicht erwärmt. Man setzt bei Raumtemperatur das 5fache Volumen einer Mischung aus Hexan und Methylcyclohexan im Verhältns 1 : 1 zu. Während das PPE ausfällt, bleibt das unmodifizierte EPDM-Harz gelöst.

**Beispiel 9**

Aus einer Mischung aus 90 Gewichtsprozent des Polyphenylenethers, der nach Beispiel 2 ohne Zusatz des modifizierten EPDM-Harzes erhalten wird, und 10 Gewichtsprozent des in Beispiel 1 eingesetzten EPDM-Harzes werden Preßplatten hergestellt. Das Torsionsschwingungsspektrum ist in Abbildung 1 wiedergegeben. Man erkennt oberhalb der Glastemperatur des EPDM einen deutlichen Rückgang des Elastizitätsmoduls der physikalischen Mischung.

**Beispiel 10**

Aus einer Mischung von Polyphenylenether und EPDM-Polyphenylenether-Kammpolymer, die nach Beispiel 2 erhältlich ist, werden Preßplatten hergestellt. Das Torsionsschwingungsspektrum ist in Abbildung 2 wiedergegeben. Man erkennt, daß auch oberhalb der zu beobachtbaren Glasübergangstemperatur der EPDM-Phase der Elastizitätsmodul der gesamten Mischung weitgehend unverändert bleibt.

**Patentansprüche**

1. Verfahren zur Herstellung von Polymeren mit wiederkehrenden Phenylenether-Einheiten durch oxidative Kupplungsreaktion von in ortho-Stellung substituierten Phenolen (I) in Gegenwart eines 2,4,6-trisubstituierten Phenols (II) und eines Kupferaminkatalysators,
dadurch gekennzeichnet,
daß man als trisubstituierte Phenolkomponente (II) ein Ethylen-Propylen-Ethylidennorbornen-Terpolymer oder Polyoctenylen mit Seitengruppen der Formel

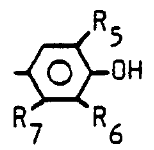 und/oder 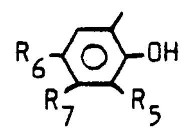

einsetzt, wobei die Reste $R_5$, $R_6$ und $R_7$ jeweils ein Halogen, einen Phenylrest oder einen n-Alkylrest mit bis zu 6 C-Atomen, vorzugsweise den Methylrest, bedeuten und der Rest $R_7$ auch Wasserstoff sein kann.

2. Verfahren nach Anspruch 1,
dadurch gekennzeichnet,
daß man als trisubstituierte Phenolkomponente (II) ein Produkt einsetzt, das durch säurekatalysierte Umsetzung eines Ethylen-Propylen-Ethylidennorbornen-Terpolymers oder Polyoctenylens (III) mit Phenolen (IV) der Formel

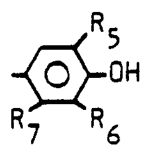 und/oder 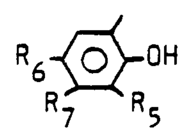

erhältlich ist.

3. Verfahren nach Anspruch 2,
dadurch gekennzeichnet,
daß die Komponente (III) ein Ethylen-Propylen-Ethylidenorbornen-Terpolymer ist.

4. Verfahren nach Anspruch 2,
dadurch gekennzeichnet,
daß die Komponente (III) ein Polyoctenylen ist.

5. Verfahren nach den Ansprüchen 1 bis 4,
dadurch gekennzeichnet,
daß der Masseanteil der in Anspruch 1 aufgeführten trisubstituierten Phenolkomponente (II), bezogen auf die Gesamtmenge der eingesetzten Phenole (I + II), 1 bis 50 % beträgt.

6. Verfahren zur Herstellung eines Kohlenwasserstoffharz-Polyphenylenether-Kammpolymeren,
dadurch gekennzeichnet,
daß man die nach den Verfahren der Ansprüche 1 bis 5 erhältlichen homogenen Lösungen des Reaktionsprodukts in einem organischen Lösemittel, wie z. B. Toluol, mit einem - bezogen auf Polyphenylenether - sogenannten "Antilösemittel" versetzt, den Polyphenylenether ausfällt und das Kammpolymere aus der erhaltenen Lösung durch Entfernung des Lösemittel isoliert.

7. Mischungen aus Polyphenylenethern und Kohlenwasserstoffharz-Polyphenylenether-Kammpolymeren, erhältlich nach den Verfahren der Ansprüche 1 bis 5.

8. Kohlenwasserstoffharz-Polyphenylenether-Kammpolymere, erhältlich nach Anspruch 6.

**Claims**

1. A process for the preparation of a polymer containing recurring phenylene ether units by the oxidative coupling reaction of an ortho-substituted phenol (I) in the presence of a 2,4,6-trisubstituted phenol (II) and in the presence of a copper amine catalyst, characterised in that an ethylene/propylene/ethylidenenorbornene terpolymer or a polyoctenylene containing side groups of the formula

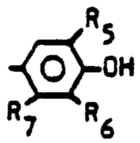

and/or

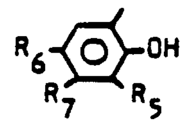

where the radicals $R_5$, $R_6$ and $R_7$ each denote halogen, a phenyl radical or an n-alkyl radical having up to 6 C atoms, preferably the methyl radical, and the $R_7$ radical may alternatively be hydrogen, is employed as trisubstituted phenol component (II).

2. A process according to claim 1, characterised in that a product obtainable by acid-catalysed reaction of an ethylene/propylene/ethylidenenorbornene terpolymer or a polyoctenylene (III) with a phenol (IV) of the formula

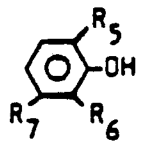

and/or

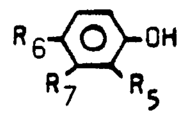

is employed as trisubstituted phenol component (II).

3. A process according to claim 2, characterised in that component (III) is an ethylene/propylene/ethylidenenorbornene terpolymer.

4. A process according to claim 2, characterised in that component (III) is a polyoctenylene.

5. A process according to any of claims 1 to 4, characterised in that the proportion by weight of the trisubstituted phenol component (II) mentioned in claim 1 is 1 to 50 %, based on the total amount of the phenols (I + II) employed.

6. A process for the preparation of a hydrocarbon resin/polyphenylene ether comb polymer, characterised in that the homogeneous reaction product solutions obtainable by the process of any of claims 1 to 5 in an organic solvent, such as, for example, toluene, is treated with a so-called "anti-solvent" - as far as polyphenylene ether is concerned -, the polyphenylene ether is precipitated, and the comb polymer is isolated from the resultant solution by removing the solvent.

7. A mixture of a polyphenylene ether and a hydrocarbon resin/polyphenylene ether comb polymer, obtainable by the process of any of claims 1 to 5.

8. A hydrocarbon resin/polyphenylene ether comb polymer, obtainable according to claim 6.

**Revendications**

1. Procédé de préparation de polymères présentant des unités éther phénylénique récurrentes, par réaction de copulation oxydante de phénols (I) substitués en ortho, en présence d'un phénol (II) 2,4,6-trisubstitué et d'un catalyseur cuivre-amine,

caractérisé par le fait que l'on utilise, comme composant phénolique (II) trisubstitué, un terpolymère d'éthylène, de propylène et d'éthylidène-norbornène, ou un poly-octénylène comportant des groupes latéraux des formules

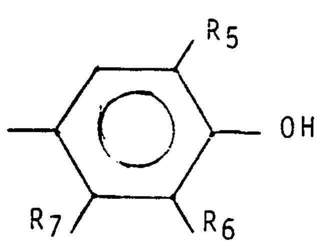

et/ou

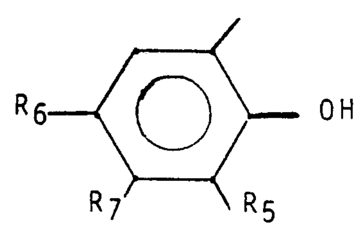

les radicaux $R_5$, $R_6$ et $R_7$ représentant chacun un halogène, un reste phényle ou un reste n-alkyle comportant jusqu'à 6 atomes de carbone, de préférence le reste méthyle, et le reste $R_7$ pouvant également être de l'hydrogène.

2. Procédé selon la revendication 1, caractérisé par le fait que l'on utilise, comme composant phénolique (II) trisubstitué, un produit qui peut être obtenu en faisant réagir, en présence d'un catalyseur acide, un terpolymère d'éthylène, de propylène et d'éthylidène-norbornène, ou un poly-octénylène (III), sur des phénols (IV) des formules

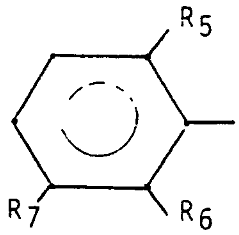 et/ou 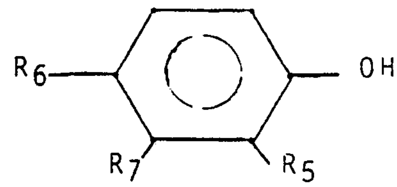

3. Procédé selon la revendication 2, caractérisé par le fait que le composant (III) est un terpolymère d'éthylène, de propylène et d'éthylidène-norbornène.

4. Procédé selon la revendication 2, caractérisé par le fait que le composant (III) est un poly-octénylène.

5. Procédé selon les revendications 1 à 4, caractérisé par le fait que la fraction en masse du composant phénolique (II) trisubstitué qui est indiqué dans la revendication 1 est de 1 à 50 %, relativement à la quantité totale des phénols (I + II) utilisés.

6. Procédé de préparation d'un polymère en peigne à base de résine hydrocarbonée et d'éther polyphénylénique,

caractérisé par le fait qu'aux solutions homogènes du produitréactionnel dans un solvant organique comme le toluène, par exemple, qui sont obtenues selon le procédé des revendications 1 à 5, on ajoute ce que, relativement à l'éther polyphénylénique, on appelle un antisolubiliant, que l'on précipite l'éther polyphénylénique et qu'après avoir éliminé le solvant, on isole le polymère en peigne à partir de la solution obtenue.

7. Les mélanges d'éthers polyphényléniques et de polymères en peigne, à base d'une résine hydrocarbonée et d'éther polyphénylénique, que l'on peut obtenir selon le procédé des revendications 1 à 5.

8. Les polymères en peigne, à base de résine hydrocarbonée et d'éther polyphénylénique, que l'on peut obtenir selon la revendication 6.

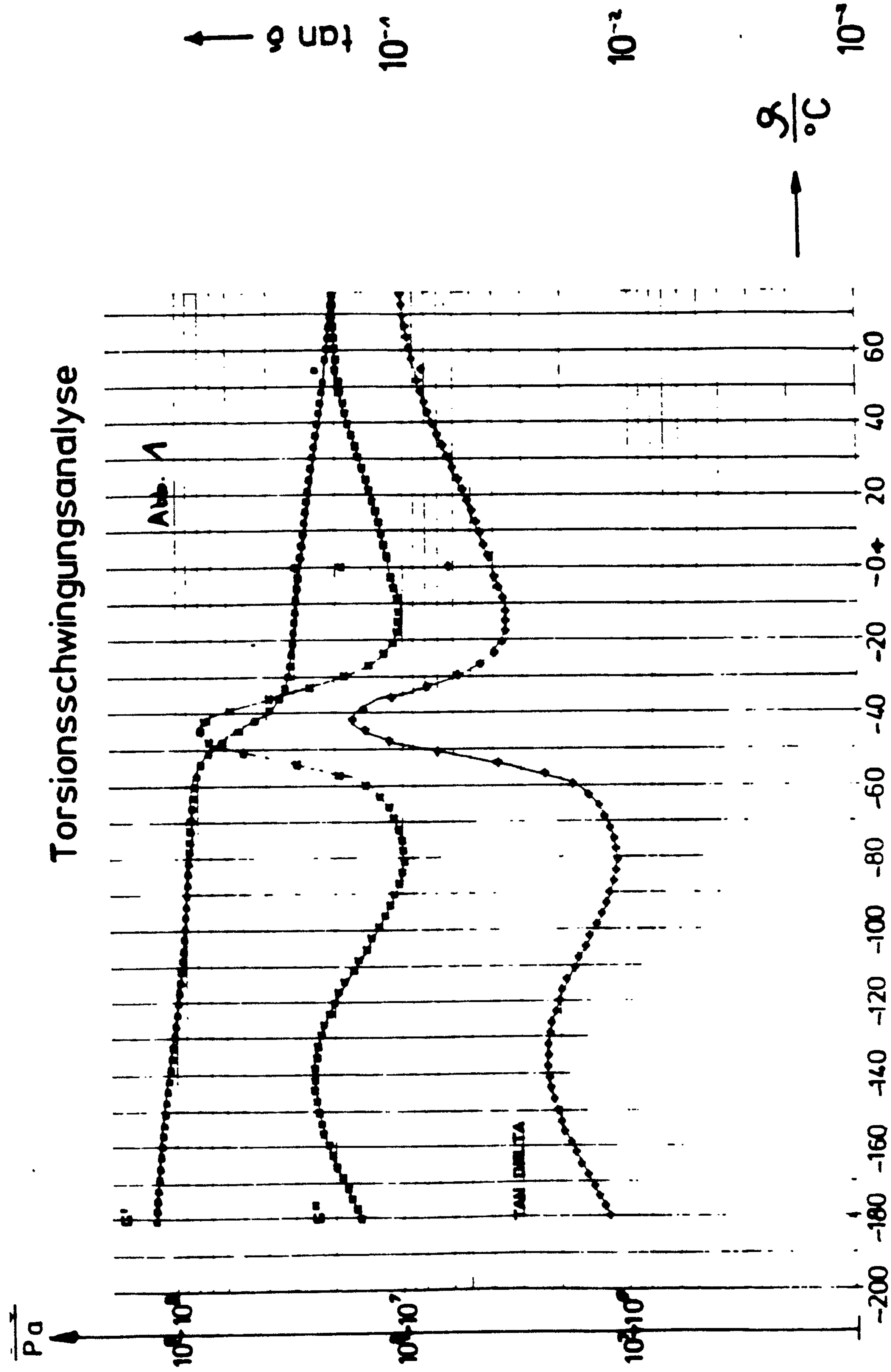
Torsionsschwingungsanalyse
Abb. 1
tan δ
G'
G''
TAN DELTA
ϑ/°C
Pa

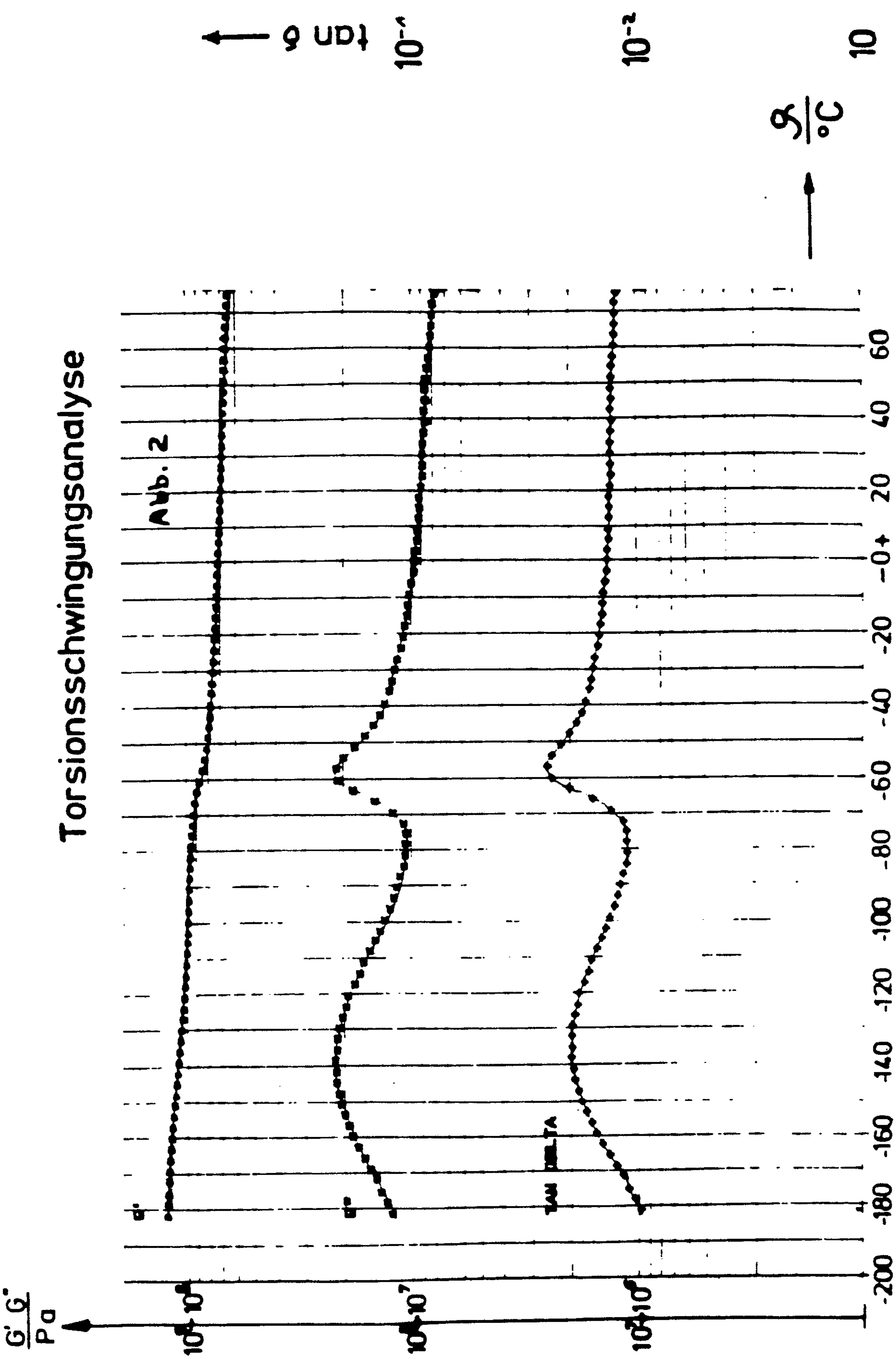
Torsionsschwingungsanalyse
Abb. 2
G' G" / Pa
tan δ
$10^{-1}$
$10^{-2}$
10
ϑ / °C
G'
G"
TAN DELTA
-200
-180
-160
-140
-120
-100
-80
-60
-40
-20
-0+
20
40
60
$10^{8}$
$10^{7}$
$10^{6}$